# EUROPEAN PATENT SPECIFICATION

(11) **EP 4 387 200 B1**
(45) Date of publication and mention of the grant of the patent: **25.03.2026**
(21) Application number: 22868789.3
(22) Date of filing: 29.06.2022
(51) Int. Cl.: H04L 67/00, H04L 67/06, H04L 69/30

(54) **MESSAGE PROCESSING METHOD, NETWORK CARD AND SERVER**
NACHRICHTENVERARBEITUNGSVERFAHREN, NETZWERKKARTE UND SERVER
PROCÉDÉ DE TRAITEMENT DE MESSAGES, CARTE RÉSEAU ET SERVEUR

(30) Priority: 18.09.2021 CN 202111101090
(43) Date of publication of application: 19.06.2024
(73) Proprietor: Huawei Technologies Co., Ltd., Shenzhen, Guangdong 518129 (CN)
(72) Inventor: XU, Junjie, Shenzhen, Guangdong 518129 (CN)
(74) Representative: Gill Jennings & Every LLP
(86) International application number: PCT/CN2022/102190
(87) International publication number: WO 2023/040412

(56) References cited:
- WO-A1-2021/128089
- CN-A- 104 092 581
- CN-A- 106 330 776
- CN-A- 112 788 158
- US-B2- 8 917 742
- US-B2- 9 742 682

## Description

### TECHNICAL FIELD

This application relates to the field of computer technologies, and in particular, to a packet processing method, a network interface card, and a server.

### BACKGROUND

Cloud technology is a research hotspot today, and a computer device and a storage device are usually deployed in a cluster manner. As a cluster scale becomes larger, data transmission traffic becomes larger, and network transmission performance becomes a major factor affecting data transmission efficiency.

Currently, because the computer device needs to limit access capabilities between different programs, to prevent the programs from obtaining memory data of another program or obtaining data of a peripheral device, in a processor, there are two divided right levels: a user mode and a kernel mode. When a task or a process executes a system call and is executed in kernel code, the process is referred to as in the kernel mode. In this case, the processor is executed in the kernel code with a highest privilege level. When a process executes user code, it is referred to as in the user mode. In this case, the processor runs in the user code with a lowest privilege level, and can only use a conventional processor instruction set, but cannot use a processor instruction set that operates a hardware resource. Generally, an application is run in the user mode, and packets received and sent by the application need to be processed in the kernel mode. Specifically, a received packet is processed by a protocol stack of a central processing unit (central processing unit, CPU). In addition, a data part in a sent data packet needs to be forwarded to the application by using the processor. Therefore, an overhead of the processor increases. As a quantity of packets received or sent by the processor increases, a processing capability of the processor cannot meet a performance requirement, thereby not only reducing the network transmission performance, increasing a network access delay, but also increasing a delay of receiving or sending data by the application. Therefore, how to provide a more efficient data transmission method becomes an urgent technical problem to be resolved.

US 8 917 742 B2 relates to a network interface that connects a computing device to a network which may be configured to process incoming packets and determine an action to take with respect to each packet, thus decreasing processing demands on a processor of the computing device. US 9 742 682 B2 relates to a network interface controller (NIC) that includes a set of receive NIC queues capable of performing large receive offload (LRO) operations by aggregating incoming receive packets. CN 106 330 776 A relates to the field of communications, and in particular, to a packet processing method and apparatus.

### SUMMARY

This application provides a packet processing method, a network interface card, and a server. The method is used for enabling a part of packets not to be processed by a kernel. In other words, processing of a part of packets bypasses a bloated kernel, thereby improving packet processing efficiency, improving network transmission performance, and reducing a network access delay.

According to a first aspect, a packet processing method is provided. The method is executed by a network interface card of a computer device. The computer device is usually a server. The method includes: The network interface card receives a first packet, and the first packet is from another server; the network interface card determines a type of the first packet, where the type of the first packet may be a control packet or a data packet, the data packet and the control packet respectively correspond to different field identifiers in an IP header, and correspondingly, the network interface card may determine the type of the first packet based on a field identifier in the IP header of the first packet; and the network interface card performs a first bypass processing operation on the first packet based on the type of the first packet. The first bypass processing operation may be understood as an operation of bypassing a kernel. Therefore, the first packet is not processed by a kernel. The first bypass processing operation may specifically include a plurality of operations. This is not specifically limited in this application.

The network interface card performs the first bypass processing operation on the first packet based on the type of the first packet, so that a part of packets is not processed by the kernel. In other words, processing of a part of packets bypasses the bloated kernel, thereby improving packet processing efficiency, improving network transmission performance, and reducing a network access delay.

The computer device further includes an operating system, and the operating system runs an application in a user mode. Correspondingly, that the network interface card performs a first bypass processing operation on the first packet based on the type of the first packet includes: When the type of the first packet is the data packet, the network interface card parses the first packet to obtain first data in the first packet. The first packet includes a packet header portion (also referred to as a packet header) and a data part (also referred to as payload (payload) data). A process of parsing the first packet may be understood as a process of removing the packet header portion to obtain the data part. A parameter required for parsing the first packet is from the kernel, and the first data is the data part in the first packet. The network interface card stores the first data in first storage space, so that the application reads the first data from the first storage space. The first storage space is storage space shared by the application and the network interface card in the computer device, may be specifically understood as storage space reserved in a memory for storing data in a packet, and may also be referred to as a buffer. A size of the first storage space is not specifically limited in embodiments. Specifically, the size of the first storage space may be adjusted based on an actual requirement.

The first packet is parsed by the network interface card. Because the kernel needs to perform a large quantity of operations, compared with a solution in which the kernel parses the data packet, in this application, a parsing speed of the first packet can be improved, thereby improving a network transmission speed and reducing a network transmission delay. In addition, because the kernel runs on a CPU, in this application, a processing overhead of the CPU can be further reduced, and performance of the application can be improved.

In addition, the network interface card parses the first packet to obtain the first data, and stores the first data in the first storage space. Because the first storage space is shared by the application and the network interface card, the application may read the first data from the first storage space. Therefore, it is unnecessary for the network interface card to report the first packet to the kernel and the kernel to store the first data in the first storage space. Therefore, a transmission path of the first data is shortened and a quantity of times of copying the first data is reduced. In addition, the application may obtain the first data from the first storage space when no notification of the kernel is received, to achieve an objective of bypassing the kernel, thereby improving transmission efficiency of the first data, improving the network transmission performance, and reducing the network access delay.

The operating system further includes the kernel. After the network interface card stores the first data in the first storage space, the method further includes: The network interface card triggers an interrupt processing operation. The interrupt processing operation indicates the kernel to notify the application to read the first data from the first storage space. A process in which the network interface card triggers the interrupt processing operation may be understood as that the network interface card changes a flag bit of a register of the processor, and the kernel detects the flag bit. When detecting that the flag bit changes, the kernel stops an operation that is being performed, and performs a processing operation corresponding to the flag bit.

The network interface card triggers the interrupt processing operation, so that a packet event of the first packet is reported. In this way, an event management module in the kernel may restore a kernel event mechanism based on the interrupt processing operation, to return an epoll listening event, a poll listening event, a select listening event, or the like to the application, so that the application reads the first data from the first storage space, and determines, based on the listening event, which server initiates an access request.

In an implementation, that the network interface card triggers an interrupt processing operation includes: The network interface card triggers the interrupt processing operation when the network interface card receives a first indication. The first indication indicates the application to stop obtaining data from the first storage space.

When the first indication is not received, the network interface card may not trigger the interrupt processing operation. In addition, the network interface card may continuously store the data part of the received data packet in the first storage space. The first storage space is usually located in an internal memory, so that the application can continuously read the data from the first storage space. When receiving the first indication, the network interface card triggers the interrupt processing operation, to notify the application to read the data in the first storage space again. Therefore, in this application, a quantity of times of triggering the interrupt processing operation can be reduced, a quantity of times that the kernel notifies the application can be reduced, and the objective of bypassing the kernel is achieved, thereby enhancing the network transmission performance and reducing the network transmission delay.

In an implementation, that the network interface card stores the first data in the first storage space includes: The network interface card stores the first data in the first storage space in a direct memory access manner. The direct memory access manner may be understood as copying the first data from one address space to another address space. The copying operation can be implemented without relying on a large quantity of interrupts of the kernel, and may be specifically performed by a controller in the direct memory access manner.

Because the direct memory access manner can be implemented without relying on the large quantity of interrupts of the kernel, and may be specifically performed by the controller in the direct memory access manner, copying efficiency of the first data can be improved, the network transmission performance can be improved, and the network access delay can be reduced.

According to a second aspect, a packet processing method is provided, and is applied to a computer device. The computer device is usually a server, and specifically includes a network interface card and an operating system. The operating system includes an application run in a user mode. The method includes: The network interface card obtains second data of the application by using a second bypass processing operation, and the second bypass processing operation may be understood as an operation of bypassing a kernel, that is, a manner of obtaining the second data without a kernel; and the network interface card sends a second packet including the second data.

The network interface card obtains the second data of the application by using the second bypass processing operation, and sends the second packet including the second data, so that obtaining of the second data bypasses the bloated kernel. Therefore, packet sending efficiency can be improved, network transmission performance can be improved, and a network access delay can be reduced.

The operating system further includes a service program run in the user mode. Correspondingly, that the network interface card obtains second data of the application by using a second bypass processing operation includes: The network interface card receives a second indication from the service program, and the second indication may be a function called by the service program; and in response to the second indication, the network interface card reads the second data from first storage space, and the first storage space is storage space shared by the application and the network interface card in the computer device.

In response to the second indication, the network interface card reads the second data from the first storage space, and sends the second packet including the second data, so that obtaining of the second data bypasses the bloated kernel. Therefore, the packet sending efficiency can be improved, the network transmission performance can be improved, and the network access delay can be reduced.

In an implementation, that the network interface card reads the second data from the first storage space includes: The network interface card reads the second data from the first storage space in a direct memory access manner.

That the network interface card reads the second data from the first storage space in a direct memory access manner can be implemented without relying on a large quantity of interrupts of the kernel, and may be specifically performed by a controller in the direct memory access manner. Therefore, efficiency of reading the second data can be improved, the network transmission performance can be improved, and the network access delay can be reduced.

Also disclosed herein is an example of a packet processing method applied to a computer device. The computer device is usually a server, and specifically includes a network interface card and a computer device. The computer device includes an application run in a user mode and a service program run in the user mode. The method includes: In response to a third indication from the application, the service program reads first data in a first packet from first storage space, where the third indication indicates the service program run in the user mode to read the first data from the first storage space, and may be specifically a function called by the application; and the service program sends the first data to the application.

In response to the third instruction, the service program reads the first data in the first packet from the first storage space, and sends the first data to the application, so that the first data is obtained when a kernel is bypassed, and problems of poor network transmission performance and a large network access delay caused by the bloated kernel are avoided. In addition, by adding the service program, modification to the application can be avoided, and universality of the method is improved.

According to another example, a packet processing method is provided, and is applied to a computer device. The computer device includes a network interface card and a computer device. The computer device is usually a server, and specifically includes an application run in a user mode and a service program run in the user mode. The method includes: In response to a fourth indication from the application, the service program sends a second indication to the network interface card. The second indication indicates the network interface card to read second data from first storage space, and the fourth indication may be a function actually called by the application.

In response to the fourth indication from the application, the service program sends the second indication to the network interface card, to indicate the network interface card to read the second data from the first storage space, so that an operation of notifying the network interface card bypasses the bloated kernel, thereby improving network transmission performance and reducing a network access delay. In addition, by adding the service program, modification to the application can be avoided, and universality of the method is improved.

According to another example, a packet processing apparatus is provided. The apparatus includes modules configured to perform the packet processing method according to any one of the first aspect or the possible implementations of the first aspect.

According to another example, a packet processing apparatus is provided. The apparatus includes modules configured to perform the packet processing method according to any one of the second aspect or the possible implementations of the second aspect.

According to another example, a packet processing apparatus is provided. The apparatus includes modules configured to perform the packet processing method according to the third aspect.

According to another example, a packet processing apparatus is provided. The apparatus includes modules configured to perform the packet processing method according to the fourth aspect.

According to a third aspect, a network interface card is provided, including one or more processors and a memory. The memory stores computer-readable instructions. The one or more processors read the computer-readable instructions, so that the network interface card implements the operation steps of the method according to any one of the first aspect or the possible implementations of the first aspect, or implements the operation steps of the method according to any one of the second aspect or the possible implementations of the second aspect.

According to a fourth aspect, a computer-readable storage medium is provided, including computer-readable instructions. When the computer-readable instructions are run on a computer, the computer is enabled to perform the operation steps of the method according to any one of the first aspect or the possible implementations of the first aspect, or perform the operation steps of the method according to any one of the second aspect or the possible implementations of the second aspect.

According to an fifth aspect, a chip is provided, including one or more processors. A part or all of the one or more processors are configured to read and execute a computer program stored in a memory, to perform the operation steps of the method according to any one of the first aspect or the possible implementations of the first aspect, or perform the operation steps of the method according to any one of the second aspect or the possible implementations of the second aspect.

Optionally, the chip includes the memory, and the memory and the processor are connected to the memory through a circuit or a wire. Further optionally, the chip further includes a communication interface, and the processor is connected to the communication interface. The communication interface is configured to receive data and/or information that needs to be processed. The processor obtains the data and/or information from the communication interface, processes the data and/or information, and outputs a processing result through the communication interface. The communication interface may be an input/output interface.

In a possible implementation, some of the one or more processors may further implement some steps of the foregoing method by using dedicated hardware. For example, processing related to a neural network model may be implemented by a dedicated neural-network processing unit or graphics processing unit.

According to a sixth aspect, a computer program product is provided. The computer program product includes computer software instructions, and the computer software instructions may be loaded by using a processor to implement the method according to any one of the implementations of the first aspect, or the second aspect.

According to a seventh aspect, a server is provided. The server includes a network interface card, and the network interface card is configured to perform the method according to any one of the implementations of the first aspect, or the second aspect.

Based on the implementations provided in the foregoing aspects, this application may be further combined to provide more implementations.

### BRIEF DESCRIPTION OF DRAWINGS

FIG. 1 is a schematic diagram of a structure of a communication system to which the method according to this application is applicable;
FIG. 2 is a schematic diagram of a system architecture of a server to which a method according to an embodiment of this application is applied;
FIG. 3 is a schematic diagram of a first embodiment of a packet processing method according to an embodiment of this application;
FIG. 4 is a flowchart of an establishment process of a TCP/IP connection;
FIG. 5 is a schematic diagram of a second embodiment of a packet processing method according to an embodiment of this application;
FIG. 6 is a schematic diagram of a third embodiment of a packet processing method according to an embodiment of this application;
FIG. 7 is a schematic diagram of a fourth embodiment of a packet processing method according to an embodiment of this application;
FIG. 8 is a schematic diagram of a fifth embodiment of a packet processing method according to an embodiment of this application;
FIG. 9 is a schematic diagram of a structure of a network interface card according to an embodiment of this application; and
FIG. 10 is a schematic diagram of a structure of a network interface card according to an embodiment of this application.

### DESCRIPTION OF EMBODIMENTS

Embodiments of this application provide a packet processing method. According to the method, a network interface card can perform bypass processing on a packet based on a type of the packet, so that a part of packets is not processed by a kernel. In other words, processing of a part of packets bypasses a bloated kernel, thereby improving packet processing efficiency, improving network transmission performance, and reducing a network access delay.

The following describes embodiments of this application with reference to the accompanying drawings.

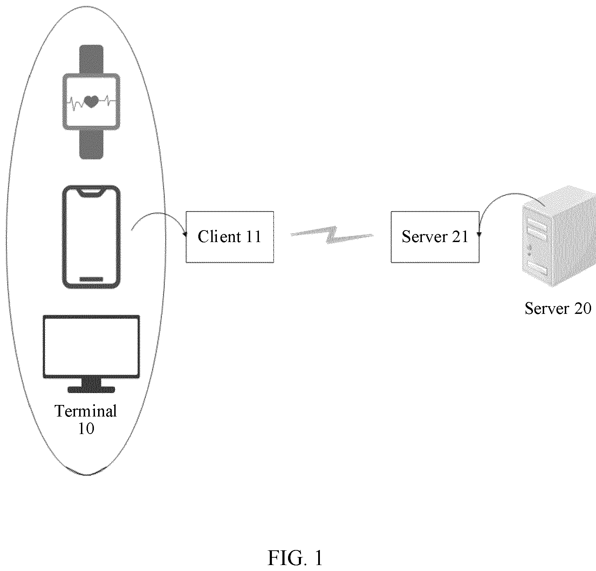

FIG. 1 is a schematic diagram of a structure of a communication system to which the method according to this application is applicable. As shown in the figure, the communications system includes a terminal 10 and a server 20. It should be noted that a quantity of servers in the communication system is not limited to two, and may alternatively include one or more servers.

The terminal 10 and the server 20 may communicate with each other in a form of a packet.

The packet may be classified into two types: a control packet (which may also be referred to as a protocol packet) and a data packet. The control packet may be understood as a packet used for implementing a control or management purpose. For example, a data transmission manner (for example, a size of transmitted data) is negotiated between communication devices, and the control packet generally does not carry payload (payload) data. For example, the control packet may be a negotiation packet of three-way handshake in a process of establishing a transmission control protocol/Internet protocol (Transmission Control Protocol/Internet Protocol, TCP/IP) connection between the terminal 10 and the server 20. The data packet is a packet carrying payload data. For example, the data packet may be a packet used for transmitting the payload (payload) data after the TCP/IP connection is established.

The server 20 is used as an example. In the server 20, a network interface card usually receives the packet from the terminal 10. Regardless of whether the received packet is the data packet or the control packet, the network interface card reports the packet to a kernel, and then a protocol stack in the kernel processes the packet. When the packet is the data packet, the protocol stack in the kernel sends a data part of the data packet to an application run in a user mode.

The following describes the packet processing method according to embodiments of this application by using a specific processing process in which the server 20 receives or sends packets as an example.

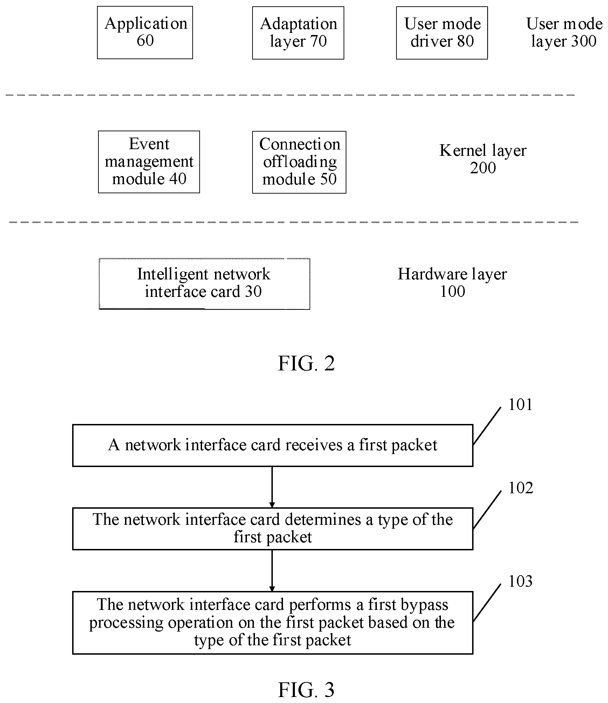

Specifically, a system architecture of the server 20 to which the method according to embodiments of this application is applied may be shown in FIG. 2. The system architecture of the server 20 includes a hardware layer 100, a kernel layer 200, and a user mode layer 300.

The hardware layer 100 includes an intelligent network interface card 30, and the intelligent network interface card 30 may be understood as a network interface card having a packet parsing function. In addition to receiving and sending the packets, the intelligent network interface card 30 is further configured to parse the packet to obtain the data part of the packet, and send the data part of the packet to an application 60 in a manner of bypassing the kernel. The manner of bypassing the kernel may be understood as a manner in which the data part in the data packet can be sent to the application 60 without processing the packet by the kernel.

The kernel layer 200 includes an event management module 40 and a connection offloading module 50.

The connection offloading module 50 is configured to offload, to the intelligent network interface card 30, a parameter required for parsing the packet, after the TCP/IP connection is established, so that the intelligent network interface card 30 can independently parse the packet based on the parameter; and release TCP/IP connection information of the TCP protocol stack in the kernel layer 200 after the TCP/IP connection is closed.

The event management module 40 is configured to restore a kernel event mechanism. Specifically, the event management module 40 wakes up a process of a listening event (for example, an epoll listening event, a poll listening event, or a select listening event, where the epoll listening event is an event obtained by improving the poll listening event) based on triggering of the intelligent network interface card 30. The process of the listening event may not only notify the application 60 to obtain the data part of the data packet, but also return the listening event to the server 20. Therefore, the server 20 determines, from multiple servers connected to the server 20, which server initiates an access request to the server 20 (or in other words, which server sends the packet to the server 20). Therefore, concurrent access to the multiple servers is implemented. This is a multiplexing function of the listening event.

The user mode layer 300 includes the application 60, an adaptation layer 70, and a user mode driver 80.

The application 60 may be any application 60 that has a receiving and sending function, and in particular, may be an application 60 that has a high requirement on network transmission performance or a long network transmission period of time, for example, may be a database, distributed storage, or Nginx.

The adaptation layer 70 is configured to intercept an application programming interface (Application Programming Interface, API) and perform a corresponding operation in place of the kernel based on the intercepted application programming interface, to achieve an objective of bypassing the kernel. The following describes a specific process of intercepting the application programming interface.

There are multiple types of application programming interfaces. Correspondingly, there may be multiple types of libraries in which the application programming interface is located. For example, the application programming interface may be a Glibc interface, and correspondingly, the library in which the Glibc interface is located may be referred to as a libc library. The adaptation layer 70 may also be referred to as a hijacking layer. When the application programming interface may be the Glibc interface, the adaptation layer 70 may also be referred to as a Glibc adaptation layer 70.

The user mode driver 80 is configured to implement, based on an indication of the adaptation layer 70, a data receiving function and a data sending function of the user mode, and packet data sharing between the user mode and the kernel.

For example, generally, the application 60 calls the kernel to send data by calling the application programming interface. In embodiments of this application, the adaptation layer 70 may intercept the application programming interface, and send the data by using the user mode driver 80. In this way, the data can be sent without the kernel, thereby achieving the objective of bypassing the kernel.

Based on the foregoing system architecture of the server, the packet processing method according to embodiments of this application is specifically described.

As shown in FIG. 3, an embodiment of this application provides an embodiment of a packet processing method. The embodiment is applied to a computer device. The computer device may be a server. The following uses the server as an example for description. Specifically, the embodiment includes the following steps:
Step 101. A network interface card receives a first packet.

The first packet is from another server, and the first packet may be a control packet or a data packet.

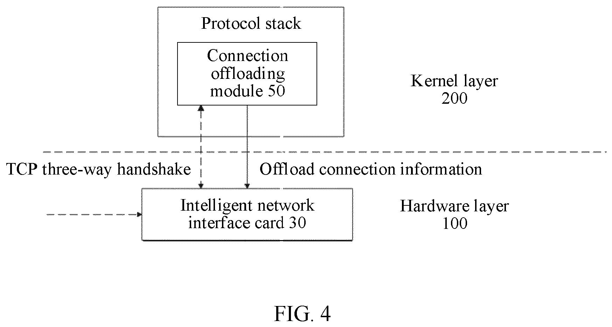

For example, before two servers communicate with each other, a TCP/IP connection needs to be established first. A TCP/IP connection establishment process is shown in FIG. 4. A kernel of one server interacts with other server by using the network interface card to complete a TCP three-way handshake, to establish the TCP/IP connection. The TCP three-way handshake includes connection initiation (Synchronize Sequence Number, SYN), a SYN+acknowledgment (Acknowledgment, ACK), and ACK. In the TCP three-way handshake process, all packets received by the network interface card from the other server are control packets.

Based on this, when the first packet is the control packet, the first packet may be a packet received in the TCP three-way handshake process.

For another example, after a TCP/IP connection is established, one server sends, to another server, the data packet that carries payload data. Based on this, the first packet may alternatively be the data packet.

Step 102. The network interface card determines a type of the first packet.

Specifically, the network interface card may determine the type of the first packet based on a field identifier in an IP header of the first packet. The type of the first packet may be the control packet, or may be the data packet. The data packet and the control packet are corresponding to different field identifiers in the IP header.

Step 103. The network interface card performs a first bypass processing operation on the first packet based on the type of the first packet.

The first bypass processing operation may be understood as an operation of bypassing the kernel, so that the first packet is not processed by the kernel.

For example, when the type of the first packet is the data packet, the network interface card may perform a parsing operation on the first packet, and send, to an application run in a user mode without the kernel, a data part obtained through parsing.

In this embodiment of this application, the network interface card performs the first bypass processing operation on the first packet based on the type of the first packet, so that a part of packets is not processed by the kernel. In other words, processing of a part of packets bypasses the bloated kernel, thereby improving packet processing efficiency, improving network transmission performance, and reducing a network access delay.

The following specifically describes a process of performing the first bypass processing operation by using another embodiment.

Specifically, embodiments of this application provide an embodiment of a packet processing method. The embodiment is applied to a computer device. The computer device includes a network interface card and an operating system. The operating system includes a kernel, an application run in a user mode, and a service program run in the user mode.

The computer device may be a server. A type of an application is not specifically limited in embodiments of this application. For example, the application may be an application such as a database, distributed storage, or Nginx.

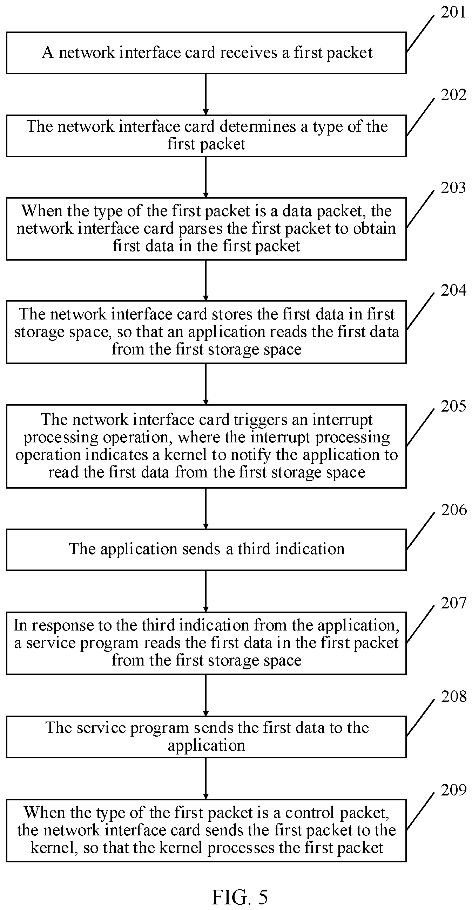

As shown in FIG. 5, this embodiment includes:
Step 201. A network interface card receives a first packet.
Step 202. The network interface card determines a type of the first packet.
Step 201 is similar to step 101, and step 202 is similar to step 102. Therefore, step 201 and step 202 may be understood with reference to related descriptions of step 101 and step 102 in the foregoing embodiment.
Step 203. When the type of the first packet is a data packet, the network interface card parses the first packet to obtain first data in the first packet.

When the first packet is the data packet, the first packet includes a packet header portion (also referred to as a packet header) and a data part (also referred to as payload (payload) data), and a process of parsing the first packet may be understood as a process of removing the packet header portion to obtain the data part.

The first data is the data part of the first packet.

Specifically, the network interface card may parse the first packet based on TCP/IP connection information. As shown in FIG. 4, the TCP/IP connection information is offloaded to the network interface card by the connection offloading module in FIG. 2 after the TCP/IP connection is established.

The connection information may include information such as a TCP/IP connection status, an initial sequence number, a maximum segment size (Maximum Segment Size, MSS), and a sliding window.

In this embodiment, the first packet is parsed by the network interface card. Because the kernel needs to perform a large quantity of operations, compared with a solution in which the kernel parses the data packet, in this embodiment, a parsing speed of the first packet can be improved, thereby improving a network transmission speed and reducing a network transmission delay. In addition, because the kernel runs on a CPU, in this embodiment, a processing overhead of the CPU can be further reduced, and performance of the application can be improved.

It should be noted that, after the TCP/IP connection information is offloaded to the network interface card, a protocol stack of the kernel may no longer update or maintain TCP protocol information, thereby reducing the processing overhead of the CPU and improving the performance of the application.

Step 204. The network interface card stores the first data in first storage space, so that the application reads the first data from the first storage space.

The first storage space is storage space shared by the application and the network interface card that are in the computer device.

The first storage space may be understood as storage space reserved in a memory for storing data in a packet, and may also be referred to as a buffer. It should be understood that the first storage space is a storage area for temporarily buffering data. After the packet is successfully sent, the data corresponding to the packet is also cleared to release a storage resource of the first storage space, to facilitate recycling of the storage resource of the first storage space.

A size of the first storage space is not specifically limited in embodiments of this application. Specifically, the size of the first storage space may be adjusted based on an actual requirement. For example, the first storage space may be 1 GB.

For example, step 204 includes:
The network interface card stores the first data in the first storage space in a direct memory access (Direct Memory Access, DMA) manner.

The DMA manner may be understood as: The first data is copied from one address space to another address space. The copying operation can be implemented without relying on a large quantity of interrupts of the kernel, and may be specifically performed by a controller in the DMA manner. Therefore, copying efficiency of the first data can be improved, network transmission performance can be improved, and a network access delay can be reduced.

Step 203 and step 204 constitute step 103.

In existing methods for obtaining a packet data, a data packet needs to be reported to a processor, and then the processor sends the data packet to a kernel. Then the kernel parses the data packet, stores a data part in the data packet into a memory, and then notifies an application. The application can read the data part in the data packet from the memory only when receiving a notification from the kernel.

In embodiments of this application, the network interface card parses the first packet to obtain the first data, and stores the first data in the first storage space. Because the first storage space is shared by the application and the network interface card, the application may read the first data from the first storage space. Therefore, it is unnecessary for the network interface card to report the first packet to the kernel and the kernel to store the first data in the first storage space. Therefore, a transmission path of the first data is shortened and a quantity of times of copying the first data is reduced. In addition, the application may obtain the first data from the first storage space when no notification of the kernel is received, to achieve an objective of bypassing the kernel, thereby improving transmission efficiency of the first data, improving the network transmission performance, and reducing the network access delay.

A process in which the application obtains the first data is described in detail below through step 206 to step 208.

It should be noted that there is a kernel event mechanism in the kernel. The kernel event mechanism means that a listening event is fed back to the application by using the event management module in FIG. 2, and a feedback operation of the event management module is performed when the network interface card reports a packet event. Therefore, if the kernel is completely bypassed (that is, the network interface card does not report a packet event of any data packet to the kernel), the kernel event mechanism is unavailable. Therefore, in embodiments of this application, the kernel event mechanism is restored through the following step 205.

Step 205. The network interface card triggers an interrupt processing operation. The interrupt processing operation indicates the kernel to notify the application to read the first data from the first storage space.

A process in which the network interface card triggers the interrupt processing operation may be understood as that the network interface card changes a flag bit of a register of the processor, and the kernel detects the flag bit. When detecting that the flag bit changes, the kernel stops an operation that is being performed, and performs a processing operation corresponding to the flag bit.

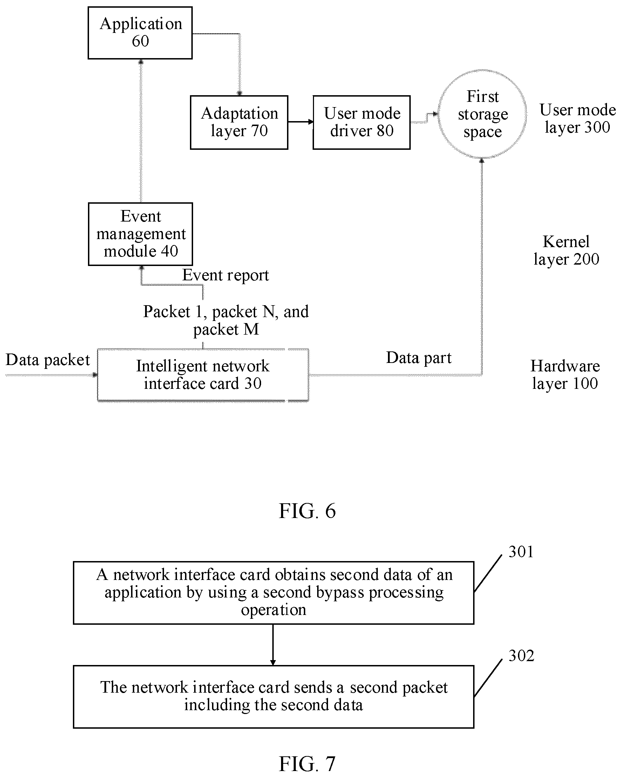

The network interface card triggers the interrupt processing operation, so that a packet event of the first packet is reported. In this way, the event management module in the kernel may recover the kernel event mechanism based on the interrupt processing operation. The method for recovering the kernel event mechanism may also be referred to as an ecosystem recovery mechanism after semi-offloading. The semi-offloading means that the data packet is offloaded to the network interface card, so that the network interface card processes the data packet, and a control packet is still processed by the kernel. In addition, as shown in FIG. 6, after the packet event of the first packet is reported, the event management module further notifies the application to read the first data (which may also be understood as waking up the application).

It should be noted that, after receiving the notification from the kernel, the application is in an awake state. The application in the awake state reads data from the first storage space. After all data in the first storage space is read, if no new data is stored in the first storage space, the application changes from the awake state to a sleep state (that is, stopping obtaining the data from the first storage space).

If the network interface card performs step 205 each time receiving a data packet, the objective of bypassing the kernel cannot be achieved, and the network transmission performance is affected.

Therefore, the network interface card may not need to perform step 205 each time receiving a data packet. Instead, after a quantity of received data packets meets a threshold, the network interface card performs step 205 once, and then re-collects statistics about a quantity of received data packets. When the quantity of received data packets meets the threshold again, the network interface card performs step 205 again, and so on. In this way, not only the objective of bypassing the kernel can be achieved, but also the kernel event mechanism can be restored.

For example, as shown in FIG. 6, after receiving a packet 1, the network interface card may perform step 205, and then disable an event reporting function. After receiving a packet N, the network interface card re-enables the event reporting function, and then performs step 205 again, and then disables the event reporting function. After receiving a packet M, the network interface card re-enables the event reporting function, and then performs step 205 again, and so on. When another packet between the packet 1 and the packet N and another packet between the packet M and the packet N are received, step 205 is not performed. Both N and M are integers greater than 1.

In this way, step 205 is performed after the packet M is received, so that the application can read, in batches, data in all packets between the packet N and the packet M from the first storage space.

It can be learned from the foregoing description that, in embodiments of this application, a quantity of times of reporting the packet event and a quantity of times of notifying the kernel can be reduced, and a cost is low, thereby achieving the objective of bypassing the kernel. A problem that the network transmission performance is affected because data packet processing is slow because all data packets are processed by the kernel can be avoided. In addition, the application can read data of a batch of packets, to reduce a quantity of times of reading the data. It can be learned from the foregoing two points that in embodiments of this application, the network transmission performance can be improved and the network transmission delay can be reduced.

In addition, based on the foregoing description, it can be learned that when the listening event (for example, an epoll event, a poll event, or a select event) needs to be returned to the application, the kernel event mechanism can be further restored in embodiments of this application.

When the application is in the awake state, the application continuously obtains data from the first storage space. After all data in the first storage space is read, the application changes from the awake state to the sleep state, and stops obtaining the data from the first storage space. Therefore, when the application is in the awake state, the network interface card may not perform step 205, but after the application enters the sleep state, the network interface card may perform step 205 to wake up the application.

Specifically, the application may send a first indication to the network interface card after entering the sleep state. The first indication indicates the application to stop obtaining the data from the first storage space.

Correspondingly, in an implementation, step 205 includes:
When the network interface card receives the first indication, the network interface card triggers the interrupt processing operation. The first indication indicates the application to stop obtaining the data from the first storage space.

In embodiments of this application, when the first indication is not received, the network interface card may not perform step 205. In addition, the network interface card may continuously store the data part of the received data packet in the first storage space. The first storage space is usually located in an internal memory, so that the application can continuously read the data from the first storage space. When receiving the first indication, the network interface card may perform step 205, to notify the application to read the data in the first storage space again. Therefore, in embodiments of this application, a quantity of times of triggering the interrupt processing operation can be reduced, a quantity of times that the kernel notifies the application can be reduced, and the objective of bypassing the kernel is achieved, thereby enhancing the network transmission performance and reducing the network transmission delay.

Based on the foregoing description, it can be learned that operation 205 may not be performed, to achieve an objective of completely bypassing the kernel. Therefore, step 205 is optional.

After receiving the notification from the kernel, the application obtains the first data. The following specifically describes, through step 206 to step 208, a process in which the application obtains the first data.

Step 206. The application sends a third indication.

The third indication indicates the service program run in the user mode to read the first data from the first storage space.

Generally, the process in which the application obtains the first data includes: calling a function (referred to as a first function in this embodiment). The first function may also be understood as a Glibc interface. In response to the first function, the kernel obtains and reads the first data, and returns the first data to the application.

In embodiments of this application, to achieve the objective of bypassing the kernel, a second function having a same name as the first function is preset, a priority of the second function is higher than that of the first function, and the service program is added in the user mode. In this way, when the application calls the first function, the second function is called to dynamically replace the first function with the second function. The service program run in the user mode may be called by using the second function to obtain the first data from the first storage space. The foregoing mechanism may be referred to as a hijacking mechanism (that is, the Glibc interface is hijacked) or an LD_PRELOAD mechanism.

It should be noted that, from the perspective of the application, the application still calls the first function. Therefore, the application does not need to perceive the second function. In other words, the application does not need to be modified. Therefore, the method according to embodiments of this application has good universality, and may be applied to multiple applications.

Based on the foregoing description, the third indication may be the second function called by the application.

Step 207. In response to the third indication from the application, the service program reads the first data in the first packet from the first storage space.

For example, the service program includes the adaptation layer and the user mode driver shown in FIG. 2. Correspondingly, step 207 may include: In response to the second function, the adaptation layer calls the user mode driver to obtain the first data from the first storage space.

Step 208. The service program sends the first data to the application.

In embodiments of this application, in response to the third indication, the service program reads the first data in the first packet from the first storage space, and sends the first data to the application, so that the first data is obtained when the kernel is bypassed, and problems of the poor network transmission performance and the large network access delay caused by the bloated kernel are avoided.

Step 203 to step 208 describe a case in which the type of the first packet is the data packet. The following describes, through step 209, a case in which the type of the first packet is the control packet.

Step 209. When the type of the first packet is the control packet, the network interface card sends the first packet to the kernel, so that the kernel processes the first packet.

In embodiments of this application, because the data packet has great impact on the network transmission performance, the data packet is offloaded to the network interface card, so that the network interface card processes the data packet, thereby reducing the processing overhead of the CPU and improving the performance of the application. In addition, compared with processing the data packet by the kernel with heavy load, in embodiments of this application, processing the data packet by the network interface card can accelerate a data packet processing speed, improve the network transmission performance, and reduce the network transmission delay. Although the control packet is complex, a quantity of control packets is small and fixed. Therefore, the control packet has small impact on the network transmission performance. The control packet is sent to the kernel, so that the kernel performs processing, and the information of the TCP protocol can be maintained in the kernel, thereby avoiding impact on an ecosystem.

The foregoing mechanism in which the network interface card processes the data packet and the kernel processes the control packet may be referred to as a TCP packet semi-offloading mechanism.

The foregoing describes a process of receiving a packet by the network interface card, and the following describes a process of sending a packet by the network interface card.

As shown in FIG. 7, this application further provides an embodiment of a packet processing method. The embodiment is applied to a computer device. The computer device includes a network interface card and an operating system. The operating system includes an application run in a user mode.

Based on this, this embodiment includes:
Step 301. The network interface card obtains second data of the application by using a second bypass processing operation.

Similar to a first bypass processing operation, the second bypass processing operation may be understood as an operation of bypassing a kernel.

The following describes step 301 in detail by using another embodiment.

Step 302. The network interface card sends a second packet including the second data.

In embodiments of this application, the network interface card obtains the second data of the application by using the second bypass processing operation, and sends the second packet including the second data, so that obtaining of the second data bypasses the bloated kernel. Therefore, packet sending efficiency can be improved, network transmission performance can be improved, and a network access delay can be reduced.

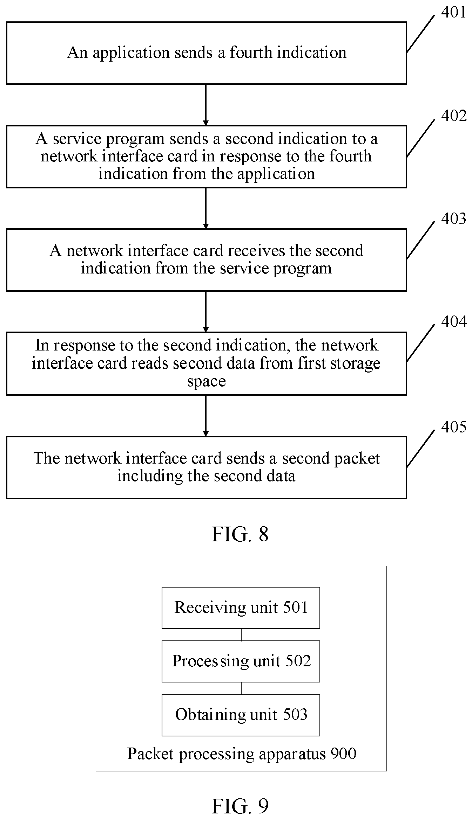

With reference to FIG. 8, the following describes another embodiment of a packet processing method provided in this application.

Specifically, this embodiment is applied to a computer device. The computer device includes a network interface card and an operating system. The operating system includes an application run in a user mode and a service program run in the user mode.

Correspondingly, this embodiment includes:
Step 401. The application sends a fourth indication.

Generally, when the application needs to send a packet, the application calls a send function. In response to the send function, a kernel obtains second data and sends a second packet including the second data.

In embodiments of this application, to achieve an objective of bypassing the kernel, a third function having a same name as the send function is preset, a priority of the third function is higher than that of the send function, and the service program is added in the user mode. In this way, when the application calls the send function, the third function is called to dynamically replace the send function with the third function. The service program run in the user mode may be called by using the third function to obtain the second data from first storage space. The foregoing mechanism may be referred to as a hijacking mechanism (that is, a Glibc interface is hijacked), or may be referred to as an LD_PRELOAD mechanism.

It should be noted that, from the perspective of the application, the application still calls the send function. Therefore, the application does not need to perceive the third function. In other words, the application does not need to be modified. Therefore, the method according to embodiments of this application has good universality, and may be applied to multiple applications.

Based on the foregoing description, the fourth indication may be the third function actually called by the application.

Step 402. The service program sends a second indication to the network interface card in response to the fourth indication from the application. The second indication indicates the network interface card to read the second data from the first storage space.

The second indication may be a function called by the service program.

For example, the service program includes the adaptation layer and the user mode driver shown in FIG. 2. Correspondingly, step 402 may include: In response to the fourth indication from the application, the adaptation layer calls the user mode driver to send the second indication to the network interface card.

Step 403. The network interface card receives the second indication from the service program.

Step 404. The network interface card reads the second data from the first storage space in response to the second indication. The first storage space is storage space shared by the application and the network interface card in the computer device.

For example, that the network interface card reads the second data from the first storage space includes: The network interface card reads the second data from the first storage space in a direct memory access manner.

That the network interface card reads the second data from the first storage space in a direct memory access manner can be implemented without relying on a large quantity of interrupts of the kernel, and may be specifically performed by a controller in the DMA manner. Therefore, efficiency of reading the second data can be improved, network transmission performance can be improved, and a network access delay can be reduced.

Step 403 and step 404 constitute step 301.

Step 405. The network interface card sends the second packet including the second data.

In embodiments of this application, in response to the fourth indication from the application, the service program sends the second indication to the network interface card, to notify the network interface card to read the second data from the first storage space, and sends the second packet including the second data. Therefore, obtaining the second data bypasses the bloated kernel, thereby improving packet sending efficiency, improving the network transmission performance, and reducing the network access delay. In addition, a function of intercepting the fourth indication by the service program is used to avoid the modification to the application, thereby improving the universality of the method according to embodiments of this application.

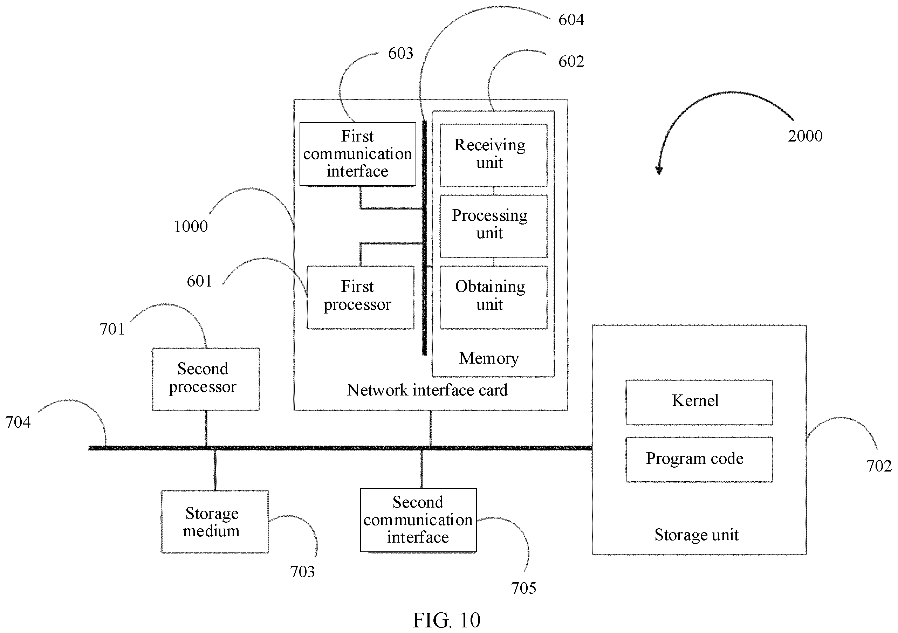

With reference to FIG. 1 to FIG. 8, the foregoing describes in detail the packet processing method provided in this application of the present invention. With reference to FIG. 9 and FIG. 10, the following describes a packet processing apparatus 900 and a network interface card 1000 provided in embodiments of this application of the present invention.

As shown in FIG. 9, this embodiment of this application provides a packet processing apparatus 900. The packet processing apparatus 900 includes: a receiving unit 501, configured to receive a first packet; and a processing unit 502, configured to determine a type of the first packet. The processing unit 502 is further configured to perform a first bypass processing operation on the first packet based on the type of the first packet.

It should be understood that the packet processing apparatus 900 in this embodiment of this application of the present invention may be implemented by using a central processing unit (central processing unit, CPU), or may be implemented by using an application-specific integrated circuit (application-specific integrated circuit, ASIC), or may be implemented by using a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), or any combination thereof. Alternatively, when the packet processing methods shown in FIG. 3 to FIG. 8 may be implemented by using software, the packet processing apparatus 900 and modules thereof may also be software modules.

In an implementation, a computer device further includes an operating system, where the operating system runs an application in a user mode. The processing unit 502 is configured for the network interface card to parse the first packet to obtain first data in the first packet when the type of the first packet is a data packet. The processing unit 502 is configured to store the first data in first storage space, where the first storage space is storage space shared by the application and the network interface card in the computer device, so that the application reads the first data from the first storage space.

In an implementation, the operating system further includes a kernel. The processing unit 502 is configured to trigger an interrupt processing operation, where the interrupt processing operation indicates the kernel to notify the application to read the first data from the first storage space.

In an implementation, the processing unit 502 is configured to trigger the interrupt processing operation when a first indication is received. The first indication indicates the application to stop obtaining data from the first storage space.

In an implementation, the processing unit 502 is configured to store the first data in the first storage space in a direct memory access manner.

The packet processing apparatus 900 according to this embodiment of this application of the present invention may correspondingly perform the method described in this embodiment of this application of the present invention, and the foregoing and other operations and/or functions of the units in the packet processing apparatus 900 are respectively used to implement corresponding procedures of the method in FIG. 5 to FIG. 8. For brevity, details are not described herein again.

As shown in FIG. 9, the packet processing apparatus 900 further includes an obtaining unit 503, configured to obtain second data of the application by using a second bypass processing operation; and
a transceiver unit 501, configured to send a second packet including the second data.

In an implementation, the operating system further includes a service program run in the user mode; and
the obtaining unit 503 is configured to receive a second indication from the service program and in response to the second indication, read the second data from the first storage space, where the first storage space is storage space shared by the application and the network interface card in the computer device.

In an implementation, the obtaining unit 503 is configured for the network interface card to read the second data from the first storage space in the direct memory access manner.

As shown in FIG. 10, embodiments of this application further provide an embodiment of a network interface card 1000. The network interface card 1000 includes one or more first processors 601, a memory 602, and a first communication interface 603. The memory 602 stores computer-readable instructions. The one or more first processors 601 read the computer-readable instructions, so that the network interface card 1000 implements the methods in the foregoing embodiment.

It should be understood that, in this embodiment of this application, the first processor 601 may be a central processing unit (central processing unit, CPU), or the first processor 601 may be another general-purpose processor, a digital signal processing (digital signal processing, DSP), an application-specific integrated circuit (ASIC), a field programmable gate array (FPGA) or another programmable logic device, a discrete gate or transistor logic device, a discrete hardware component, or the like. The general-purpose processor may be a microprocessor, any conventional processor, or the like.

The memory 602 may include a read-only memory and a random access memory, and provide instructions and data for the first processor 601. The memory 602 may further include a nonvolatile random access memory. For example, the memory 602 may further store information about a device type.

The memory 602 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not restrictive description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The first processor 601 and the memory 602 in the network interface card 1000 communicate with each other through an internal bus. The internal bus is a communication bus encapsulated in a same chip, and is configured to implement communication between the first processor 601 and the memory 602, for example, a ring bus.

It should be understood that the network interface card 1000 in this embodiment of this application may correspond to the packet processing apparatus 900 in FIG. 9 in embodiments of this application, and may correspond to a corresponding body that performs the method according to embodiments of this application. In addition, the foregoing and other operations and/or functions of the modules of the network interface card 1000 in this embodiment are respectively used to implement corresponding procedures of the methods in FIG. 5 to FIG. 8. For brevity, details are not described herein again.

As shown in FIG. 10, embodiments of this application further provide a server 2000. As shown in the figure, the server 2000 includes a second processor 701, a storage unit 702, a storage medium 703, a bus 704, a second communication interface 705, and the network interface card 1000. The second processor 701, the storage unit 702, the storage medium 703, and the network interface card 1000 communicate with each other through the bus 704, or may implement communication through another means such as wireless transmission.

The storage medium 703 is configured to store instructions, and the second processor 701 is configured to execute the instructions stored in the storage medium 703. The storage medium 703 stores program code, and the second processor 701 may call the program code stored in the storage medium 703 to perform a corresponding operation.

The bus 704 may further include a power bus, a control bus, a status signal bus, and the like, in addition to a data bus. However, for clear description, various types of buses in the figure are marked as the bus 704.

It should be noted that the second processor 701 is similar to the first processor 601, and for details, refer to related descriptions of the first processor 601 to understand the second processor 701. Similarly, the storage unit 702 is similar to the memory 602, and for details, refer to related descriptions of the memory 602 to understand the storage unit 702.

The storage unit 702 may include a kernel, a program, a file generation module, a file transfer module, a file obtaining module, and a debugging module.

The communication interface 603 in the network interface card 1000 is not only used for external communication of the server 2000, but also used for communication between the network interface card and a component in the server 2000.

Because the network interface card 1000 is described above, the network interface card 1000 in the server 2000 may be understood with reference to the foregoing related description, and details are not described herein again.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded or executed on a computer, the procedures or functions according to embodiments of this application of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid-state drive (solid-state drive, SSD).

The foregoing descriptions are merely specific implementations of this application of the present invention. Any variation or replacement figured out by a person skilled in the art according to specific implementations provided in this application of the present invention shall fall within the protection scope of this application of the present invention, as established by the appended set of claims.

## Claims

1. A packet processing method, wherein the method is performed by a network interface card (30) of a computer device and the computer device further comprises an operating system comprising a kernel and the operating system runs an application in a user mode, the method comprising:
receiving (101), by the network interface card (30), a first packet;
determining (102), by the network interface card (30), a type of the first packet;
performing (103), by the network interface card (30), a first bypass processing operation on the first packet based on the type of the first packet by:
when the type of the first packet is a data packet, parsing (203), by the network interface card (30), the first packet to obtain first data in the first packet; and
storing (204), by the network interface card (30), the first data in first storage space, wherein the first storage space is storage space shared by the application and the network interface card (30) in the computer device, so that the application reads the first data from the first storage space, and
triggering (205), by the network interface card (30), an interrupt processing operation, wherein the interrupt processing operation indicates the kernel to notify the application to read the first data from the first storage space.

2. The method according to claim 1, wherein the triggering (205), by the network interface card (30), an interrupt processing operation comprises:
when the network interface card (30) receives a first indication, triggering, by the network interface card (30), the interrupt processing operation, wherein the first indication indicates the application to stop obtaining data from the first storage space.

3. The method according to claim 1 or 2, wherein the storing (204), by the network interface card (30), the first data in first storage space comprises:
storing, by the network interface card (30), the first data in the first storage space in a direct memory access manner.

4. A packet processing method, applied to a computer device, wherein the computer device comprises a network interface card (30) and an operating system, and the operating system comprises an application running in a user mode and a service program run in the user mode; and
the method comprises:
obtaining (301), by the network interface card (30), second data of the application by using a second bypass processing operation by:
receiving, by the network interface card (30), a second indication from the service program; and
reading, by the network interface card (30), the second data from first storage space in response to the second indication, wherein the first storage space is storage space shared by the application and the network interface card (30) in the computer device; and
sending (302), by the network interface card (30), a second packet comprising the second data.

5. The method according to claim 4, wherein the reading, by the network interface card (30), the second data from first storage space comprises:
reading, by the network interface card (30), the second data from the first storage space in a direct memory access manner.

6. A network interface card (30), comprising a memory and a processor, wherein the memory is configured to store computer-readable instructions, and the processor is configured to read the computer-readable instructions and implement the method according to any one of claims 1 to 5.

7. A computer storage medium, storing computer-readable instructions, wherein when the computer-readable instructions are executed by a processor, the method according to any one of claims 1 to 5 is implemented.

8. A computer program product, wherein the computer program product comprises computer-readable instructions, and when the computer-readable instructions are executed by a processor, the method according to any one of claims 1 to 5 is implemented.

9. A chip system, wherein the chip system comprises at least one processor, the processor is configured to execute a computer program or instructions stored in a memory, and when the computer program or the instructions are executed in the at least one processor, the method according to any one of claims 1 to 5 is implemented.

10. A server (20), wherein the server (20) comprises a network interface card (30), and the network interface card (30) is configured to perform the method according to any one of claims 1 to 5.

## Patentansprüche

1. Paketverarbeitungsverfahren, wobei das Verfahren von einer Netzwerkschnittstellenkarte (30) einer Computervorrichtung durchgeführt wird und die Computervorrichtung ferner ein Betriebssystem, umfassend einen Systemkern, umfasst und das Betriebssystem eine Anwendung in einem Benutzermodus laufen lässt, das Verfahren umfassend:
Empfangen (101) eines ersten Pakets durch die Netzwerkschnittstellenkarte (30);
Bestimmen (102) eines Typs des ersten Pakets durch die Netzwerkschnittstellenkarte (30);
Durchführen (103) einer ersten Bypass-Verarbeitungsoperation an dem ersten Paket durch die Netzwerkschnittstellenkarte (30) basierend auf dem Typ des ersten Pakets durch Folgendes:
wenn der Typ des ersten Pakets ein Datenpaket ist, Parsen (203) des ersten Pakets durch die Netzwerkschnittstellenkarte (30), um erste Daten in dem ersten Paket zu erlangen; und
Speichern (204) der ersten Daten in einem ersten Speicherplatz durch die Netzwerkschnittstellenkarte (30), wobei der erste Speicherplatz ein von der Anwendung und der Netzwerkschnittstellenkarte (30) in der Computervorrichtung gemeinsam genutzter Speicherplatz ist, sodass die Anwendung die ersten Daten aus dem ersten Speicherplatz liest, und
Auslösen (205) einer Unterbrechungsverarbeitungsoperation durch die Netzwerkschnittstellenkarte (30), wobei die Unterbrechungsverarbeitungsoperation dem Systemkern anzeigt, die Anwendung zu benachrichtigen, die ersten Daten aus dem ersten Speicherplatz zu lesen.

2. Verfahren nach Anspruch 1, wobei das Auslösen (205) einer Unterbrechungsverarbeitungsoperation durch die Netzwerkschnittstellenkarte (30) Folgendes umfasst:
wenn die Netzwerkschnittstellenkarte (30) eine erste Anzeige empfängt, Auslösen der Unterbrechungsverarbeitungsoperation durch die Netzwerkschnittstellenkarte (30), wobei die erste Anzeige der Anwendung anzeigt, aufzuhören, Daten aus dem ersten Speicherplatz zu erlangen.

3. Verfahren nach Anspruch 1 oder 2, wobei das Speichern (204) der ersten Daten in dem ersten Speicherplatz durch die Netzwerkschnittstellenkarte (30) Folgendes umfasst:
Speichern der ersten Daten in dem ersten Speicherplatz durch die Netzwerkschnittstellenkarte (30) auf eine Weise eines direkten Speicherzugriffs.

4. Paketverarbeitungsverfahren, das auf eine Computervorrichtung angewendet wird, wobei die Computervorrichtung eine Netzwerkschnittstellenkarte (30) und ein Betriebssystem umfasst und das Betriebssystem eine in einem Benutzermodus laufende Anwendung und ein in dem Benutzermodus laufen gelassenes Dienstprogramm umfasst; und
das Verfahren Folgendes umfasst:
Erlangen (301) von zweiten Daten der Anwendung durch die Netzwerkschnittstellenkarte (30) mithilfe einer zweiten Bypass-Verarbeitungsoperation durch:
Empfangen einer zweiten Anzeige von dem Dienstprogramm durch die Netzwerkschnittstellenkarte (30); und
Lesen der zweiten Daten aus dem ersten Speicherplatz durch die Netzwerkschnittstellenkarte (30) als Reaktion auf die zweite Anzeige, wobei der erste Speicherplatz ein von der Anwendung und der Netzwerkschnittstellenkarte (30) in der Computervorrichtung gemeinsam genutzter Speicherplatz ist; und
Senden (302) eines zweiten Pakets, umfassend die zweiten Daten, durch die Netzwerkschnittstellenkarte (30).

5. Verfahren nach Anspruch 4, wobei das Lesen der zweiten Daten aus dem ersten Speicherplatz durch die Netzwerkschnittstellenkarte (30) Folgendes umfasst:
Lesen der zweiten Daten aus dem ersten Speicherplatz durch die Netzwerkschnittstellenkarte (30) auf eine Weise eines direkten Speicherzugriffs.

6. Netzwerkschnittstellenkarte (30), umfassend einen Speicher und einen Prozessor, wobei der Speicher konfiguriert ist, um computerlesbare Anweisungen zu speichern, und der Prozessor konfiguriert ist, um die computerlesbaren Anweisungen zu lesen und das Verfahren nach einem der Ansprüche 1 bis 5 zu implementieren.

7. Computerspeichermedium, das computerlesbare Anweisungen speichert, wobei, wenn die computerlesbaren Anweisungen durch einen Prozessor ausgeführt werden, das Verfahren nach einem der Ansprüche 1 bis 5 implementiert wird.

8. Computerprogrammprodukt, wobei das Computerprogrammprodukt computerlesbare Anweisungen umfasst und, wenn die computerlesbaren Anweisungen durch einen Prozessor ausgeführt werden, das Verfahren nach einem der Ansprüche 1 bis 5 implementiert wird.

9. Chipsystem, wobei das Chipsystem mindestens einen Prozessor umfasst, der Prozessor konfiguriert ist, um ein Computerprogramm oder Anweisungen auszuführen, die in einem Speicher gespeichert sind, und, wenn das Computerprogramm oder die Anweisungen in dem mindestens einen Prozessor ausgeführt wird/werden, das Verfahren nach einem der Ansprüche 1 bis 5 implementiert wird.

10. Server (20), wobei der Server (20) eine Netzwerkschnittstellenkarte (30) umfasst, und die Netzwerkschnittstellenkarte (30) konfiguriert ist, um das Verfahren nach einem der Ansprüche 1 bis 5 durchzuführen.

## Revendications

1. Procédé de traitement de paquets, dans lequel le procédé est réalisé par une carte d'interface réseau (30) d'un dispositif informatique et le dispositif informatique comprend également un système d'exploitation comprenant un noyau et le système d'exploitation fait fonctionner une application en mode utilisateur, le procédé comprenant :
la réception (101), par la carte d'interface réseau (30), d'un premier paquet ;
la détermination (102), par la carte d'interface réseau (30), d'un type du premier paquet ;
la réalisation (103), par la carte d'interface réseau (30), d'une première opération de traitement de contournement sur le premier paquet sur la base du type du premier paquet par :
lorsque le type du premier paquet est un paquet de données, l'analyse (203), par la carte d'interface réseau (30), du premier paquet pour obtenir de premières données dans le premier paquet ; et
le stockage (204), par la carte d'interface réseau (30), des premières données dans un premier espace de stockage, dans lequel le premier espace de stockage est un espace de stockage partagé par l'application et la carte d'interface réseau (30) dans le dispositif informatique, de sorte que l'application lit les premières données provenant du premier espace de stockage, et
le déclenchement (205), par la carte d'interface réseau (30), d'une opération de traitement d'interruption, dans lequel l'opération de traitement d'interruption indique au noyau de notifier l'application de lire les premières données provenant du premier espace de stockage.

2. Procédé selon la revendication 1, dans lequel le déclenchement (205), par la carte d'interface réseau (30), d'une opération de traitement d'interruption comprend :
lorsque la carte d'interface réseau (30) reçoit une première indication, le déclenchement, par la carte d'interface réseau (30), de l'opération de traitement d'interruption, dans lequel la première indication indique à l'application d'arrêter d'obtenir des données provenant du premier espace de stockage.

3. Procédé selon la revendication 1 ou 2, dans lequel le stockage (204), par la carte d'interface réseau (30), des premières données dans le premier espace de stockage comprend : le stockage, par la carte d'interface réseau (30), des premières données dans le premier espace de stockage d'une manière à accès direct à la mémoire.

4. Procédé de traitement de paquets, appliqué à un dispositif informatique, dans lequel le dispositif informatique comprend une carte d'interface réseau (30) et un système d'exploitation, et le système d'exploitation comprend une application fonctionnant en mode utilisateur et un programme de service fonctionnant en mode utilisateur ; et
le procédé comprend :
l'obtention (301), par la carte d'interface réseau (30), de secondes données de l'application en utilisant une seconde opération de traitement de contournement par :
la réception, par la carte d'interface réseau (30), d'une seconde indication provenant du programme de service ; et
la lecture, par la carte d'interface réseau (30), des secondes données provenant d'un premier espace de stockage en réponse à la seconde indication, dans lequel le premier espace de stockage est un espace de stockage partagé par l'application et la carte d'interface réseau (30) dans le dispositif informatique ; et
l'envoi (302), par la carte d'interface réseau (30), d'un second paquet comprenant les secondes données.

5. Procédé selon la revendication 4, dans lequel la lecture, par la carte d'interface réseau (30), des secondes données provenant d'un premier espace de stockage comprend :
la lecture, par la carte d'interface réseau (30), des secondes données provenant du premier espace de stockage d'une manière à accès direct à la mémoire.

6. Carte d'interface réseau (30), comprenant une mémoire et un processeur, dans lequel la mémoire est configurée pour stocker des instructions lisibles par ordinateur, et le processeur est configuré pour lire les instructions lisibles par ordinateur et mettre en œuvre le procédé selon l'une quelconque des revendications 1 à 5.

7. Support de stockage lisible par ordinateur, stockant des instructions lisibles par ordinateur, dans lequel lorsque les instructions lisibles par ordinateur sont exécutés par un processeur, le procédé selon l'une quelconque des revendications 1 à 5 est mis en œuvre.

8. Produit de programme informatique, dans lequel le produit de programme informatique comprend des instructions lisibles par ordinateur, et lorsque les instructions lisibles sur ordinateur sont exécutées par un processeur, le procédé selon l'une quelconque des revendications 1 à 5 est mis en œuvre.

9. Système de puce, dans lequel le système de puce comprend au moins un processeur, le processeur est configuré pour exécuter un programme informatique ou des instructions stockées dans une mémoire, et lorsque le programme informatique ou les instructions sont exécutés dans l'au moins un processeur, le procédé selon l'une quelconque des revendications 1 à 5 est mis en œuvre.

10. Serveur (20), dans lequel le serveur (20) comprend une carte d'interface réseau (30), et la carte d'interface réseau (30) est configurée pour réaliser le procédé selon l'une quelconque des revendications 1 à 5.
